# EUROPÄISCHE PATENTSCHRIFT

(11) **EP 2 935 739 B1**
(45) Veröffentlichungstag und Bekanntmachung des Hinweises auf die Patenterteilung: **07.12.2016**
(21) Anmeldenummer: 13821450.7
(22) Anmeldetag: 20.12.2013
(51) Int. Cl.: E05B 85/04, E05B 63/12, E05B 63/14, E05B 79/04, B60J 5/04, E05C 1/08, E05B 81/00, E05B 85/22, E05B 15/02

(54) **ABDECKVORRICHTUNG FÜR EIN MIT EINEM SCHLIESSKEILMODUL IN EINE DIE VERBINDUNG EINER FAHRZEUGTÜRE MIT EINEM SEITENWANDRAHMEN EINER FAHRZEUGKAROSSERIE BEWIRKENDE LÖSBARE KOPPLUNG BRINGBARES HALTEBACKENMODUL**
COVER DEVICE FOR A RETAINING JAWS MODULE THAT CAN BE DETACHABLY COUPLED TO A STRIKER PLATE MODULE TO BRING ABOUT THE CONNECTION OF A VEHICLE DOOR AND A SIDE WALL FRAME OF A VEHICLE BODY
DISPOSITIF DE RECOUVREMENT POUR UN MODULE FLASQUE DE RETENUE POUVANT ÊTRE AMENÉ EN ACCOUPLEMENT LIBÉRABLE A L'AIDE D'UN MODULE A CLAVETTES DE FERMETURE CRÉANT UNE LIAISON ENTRE UNE PORTE DE VÉHICULE ET UN CADRE DE PAROI LATÉRALE SUR UNE CARROSSERIE DE VÉHICULE

(30) Priorität: 24.12.2012 DE 102012025392
(43) Veröffentlichungstag der Anmeldung: 28.10.2015
(73) Patentinhaber: Audi AG, 85045 Ingolstadt (DE)
(72) Erfinder: SCHOCH, Marion, 74172 Neckarsulm (DE); LE GRIFFON, Jean-Bernard, 74254 Offenau (DE)
(74) Vertreter: Patzelt, Heike Anna Maria
(86) Internationale Anmeldenummer: PCT/EP2013/003883
(87) Internationale Veröffentlichungsnummer: WO 2014/101995

(56) Entgegenhaltungen:
- DE-C- 219 029
- DE-U1- 9 105 557

## Beschreibung

Die Erfindung betrifft Abdeckvorrichtung für ein mit einem Schließkeilmodul in eine die Verbindung einer Fahrzeugtüre mit einem Seitenwandrahmen einer Fahrzeugkarosserie bewirkende lösbare Kopplung bringbares Haltebackenmodulgemäß Oberbegriff des Patentanspruchs 1.

Eine gattungsbildende Abdeckvorrichtung ist aus der DE 10 2012 011 420 A1 bekannt.

Die aus der DE 10 2012 011 420 A1 bekannte Kupplungsvorrichtung eines Fahrzeugs zur lösbaren Verbindung eines schwenkbeweglich gelagerten Karosserieteils, insbesondere einer Fahrzeugtüre, Heck- oder Frontklappe mit einem Fahrzeugstrukturteil, umfasst ein erstes, mit zwei parallel gegeneinander verschiebbar gelagerten Schließkeilen mit Keilflächen ausgebildetes Kupplungselement als Schließkeilmodul und ein mit diesem zusammenwirkendes zweites Kupplungselement als Haltebackenmodul, wobei im gekoppelten Zustand der Kupplungsvorrichtung über aneinander liegende Keilflächen das Schließkeilmodul und das Haltebackenmodul spielfrei gekoppelt sind. Das Haltebackenmodul ist mit zwei, das Schließkeilmodul zwischen sich aufnehmenden Haltebacken mit Keilflächen aufweisenden Keilnuten ausgebildet, derart dass mittels einer motorischen Antriebsvorrichtung die Schließkeile durch auseinander verlagern mit ihren Keilflächen in die Keilnuten unter Anlage an deren Keilflächen gedrückt werden.

Mit dieser Kupplungsvorrichtung wird mit nur zwei Schließkeilen ein wirksamer Formschluss mit den Haltebacken des Haltebackenmoduls erzielt, nämlich in allen in der Ebene senkrecht zu den Schließkeilen liegenden Richtungen, sowohl in Fahrzeuglängsrichtung (x-Richtung) als auch in Fahrzeughochrichtung (z-Richtung). In der Richtung, in der die Schließkeile in die Keilnuten der Haltebacken gefahren werden, besteht ein hoher Kraftschluss. Dies kann durch Anbringen sogenannter Schließnasen an den Schließkeilen zu einem Formschluss in y-Richtung verbessert werden.

Ferner ist in dieser DE 10 2012 011 420 A1 ein Haltebackenmodul beschrieben, bei welchem die beiden Haltebacken von einer verfahrbaren bzw. verschiebbaren Abdeckung überbrückbar sind, um das Eindringen von Schmutz in dieses Schließkeilmodul zu verhindern. Verbesserungsbedürftig ist allerdings die Optik dieses Schließkeilmoduls bei geöffneter Fahrzeugtüre als auch der Verletzungsschutz, da dieses Haltebackenmodul, insbesondere deren Haltebacken Ecken und Kanten aufweisen, an denen sich unter Umständen Fahrzeugpassagiere beim Ein- oder Aussteigen verletzen könnten. Auch muss verhindert werden, dass sich hierbei die Kleidung der Fahrzeugpassagiere verfangen könnte.

Ferner ist auch die Montage eines solchen Haltebackenmoduls an einem Seitenwandrahmen einer Fahrzeugkarosserie noch nicht befriedigend gelöst, da zwischen dem Türinnenblech der Fahrzeugtüre, an welchem das Schließkeilmodul befestigt ist und dem Seitenwandrahmen große Toleranzen in allen Raumrichtungen ausgeglichen werden müssen, da ansonsten eine funktionssichere Kopplung des Schließkeilmoduls mit dem Haltebackenmodul nicht gewährleistet ist, insbesondere bereits das Einfahren des Schließkeilmoduls in das Haltebackenmodul beim Schließen der Fahrzeugtüre nicht möglich ist.

Aufgabe der Erfindung ist es daher, eine Abdeckvorrichtung für ein Haltebackenmodul der eingangs genannten Art, insbesondere eines Haltebackenmoduls der aus der DE 10 2012 011 420 A1 bekannten Kopplungsvorrichtung anzugeben, so dass in einfacher konstruktiver Weise die auftretenden Toleranzen zwischen dem Seitenwandrahmen der Fahrzeugkarosserie und der Fahrzeugtüre kompensiert werden und zur Montage eines solchen Schließkeilmoduls an dem Seitenwandrahmen der Fahrzeugkarosserie nur eine geringe Montagekomplexität erforderlich ist.

Diese Aufgabe wird gelöst durch eine Abdeckvorrichtung mit den Merkmalen des Patentanspruchs 1.

Eine solche Abdeckvorrichtung für ein mit einem Schließkeilmodul in eine die Verbindung einer Fahrzeugtüre mit einem Seitenwandrahmen einer Fahrzeugkarosserie bewirkende lösbare Kopplung bringbares Haltebackenmodul, bei welcher das an der Fahrzeugtüre der Fahrzeugkarosserie schlossseitig angeordnete Schließkeilmodul mit zwei parallel gegeneinander verschiebbar gelagerten Schließkeilen mit Keilflächen ausgebildet ist, das an dem Seitenwandrahmen angeordnete Haltebackenmodul mit zwei, das Schließkeilmodul zwischen sich aufnehmenden Haltebacken mit Keilflächen aufweisenden Keilnuten ausgebildet ist, wobei mittels einer Antriebseinrichtung die Schließkeile durch auseinander verlagern mit ihren Keilflächen in die Keilnuten gedrückt werden, und die beiden Haltebacken von einer verschiebbaren Abdeckung überbrückbar sind, zeichnet sich erfindungsgemäß dadurch aus, dass eine mit dem Seitenwandrahmen verbundene Halteblende vorgesehen ist, welche die für das Einführen des Schließkeilmoduls in das Haltebackenmodul vorgesehene Einführstirnseite sowie die angrenzenden in Fahrzeugquerrichtung verlaufenden Längsseiten des Haltebackenmoduls U-förmig umschließt, und zum Ausgleich von Toleranzen eine Gummilippe vorgesehen ist, welche die Halteblende mit dem Haltebackenmodul elastisch verbindet.

Damit kann mit einer solchen Gummilippe in konstruktiv einfacher Weise ein Toleranzausgleich, insbesondere in Fahrzeuglängsrichtung (x-Richtung) als auch in Fahrzeughochrichtung (z-Richtung) realisiert werden. Auch die Montage des Schließkeilmoduls mit der erfindungsgemäßen Abdeckvorrichtung ist einfach und schnell durchführbar, da nach der Montage der Halteblende an dem Seitenwandrahmen der Fahrzeugkarosserie das Haltebackenmodul mit der Gummilippe gehalten wird, so dass bei geschlossener Fahrzeugtüre das Schließkeilmodul von dem Haltbackenmodul aufgenommen werden kann und dadurch eine selbstzentrierende und toleranzausgleichende Wirkung hinsichtlich der Lage des Haltebackenmoduls erzeugt wird, so dass diese Lage nur noch durch Verbinden, bspw. mittels einer Schraubverbindung mit dem Seitenwandrahmen zu fixieren ist.

Nach einer vorteilhaften Ausgestaltung der Erfindung ist auf dem Haltebackenmodul eine Rahmenblende angeordnet, welche die haltebackenmodulseitige Kante der Gummilippe überdeckt und die offenen Enden der Gummilippe mittels eines stegartigen Rahmenblendenteils der Rahmenblende verbindet, so dass sich auch in Fahrzeugquerrichtung (y-Richtung) ein Toleranzausgleich ergibt, da durch die Abdeckung der Gummilippe durch die Rahmenblende auf der Einführstirnseite auch in y-Richtung an dieser Einführstirnseite die Gummilippe diesen Toleranzausgleich realisieren kann. Um den aufgrund des Toleranzausgleichs in y-Richtung an der äußeren Kante des Rahmenblendenteils der Rahmenblende entstehenden Spalt zur benachbarten Kante des Haltebackenmoduls abzudecken, ist vorzugsweise auf der Rahmenblende eine Stegblende verschiebbar angeordnet, welche die äußere Kante des Rahmenblendenteils der Rahmenblende überdeckt und mit der benachbarten Kante des Haltebackenmoduls abschließt.

Durch eine solche Rahmenblende ergibt sich zusammen mit der Stegblende eine optisch ansprechende Gestaltung des an dem Seitenwandrahmen mittels der Halteblende montierten Haltebackenmoduls.

Nach einer weiteren vorteilhaften Ausgestaltung der Erfindung ist ein das Haltebackenmodul mit dem Seitenwandrahmen verbindendes Halterelement vorgesehen, welches zur Befestigung an dem Seitenwandrahmen mit in z- und x-Richtung toleranzausgleichenden Befestigungsöffnungen ausgebildet ist und zur Befestigung des Haltebackenmoduls an dem Halterelement an demselben in y-Richtung toleranzausgleichende Befestigungsöffnungen vorgesehen sind.

Damit ergibt sich eine einfache und schnelle Montage des Haltebackenmoduls, indem zunächst das mit der Rahmenblende und der Stegblende komplettierte Haltebackenmodul an der Halteblende montiert wird und bei geschlossener Türe, also in einem Zustand, bei dem das Schließkeilmodul mit dem Haltebackenmodul gekoppelt ist, ein Ausgleich der Toleranzen zwischen der Fahrzeugtüre und dem Seitenwandrahmen durch die Gummilippe der Halteblende erfolgt und anschließend das in die richtige Lage verschobene Haltebackenmodul mittels des Halterelementes fest mit dem Seitenwandrahmen verbunden wird.

Vorzugsweise ist das Halteelement U-förmig ausgebildet, wobei die Befestigungsöffnung zur Befestigung an dem Seitenwandrahmen an wenigstens einem Schenkel des Halteelements vorgesehen sind und die Befestigungsöffnungen zur Befestigung des Haltebackenmoduls an dem die beiden Schenkel verbindenden Mittelteil des Halteelements ausgebildet sind.

In einer weiteren Ausgestaltung der Erfindung ist es vorgesehen, dass die Abdeckung die beiden Haltebacken formschlüssig verbindend ausgebildet ist und einen die Einführstirnseite des Haltebackenmoduls formschlüssig abdeckenden Flansch aufweist. Vorzugsweise weist der Flansch der Abdeckung an die Keilnuten der Haltebacken angepasste Nasen auf. Dies führt zu einer vollständigen, optisch ansprechenden Abdeckung des Haltebackenmoduls.

Besonders vorteilhaft gemäß einer Weiterbildung der Erfindung ist es, wenn das Haltebackenmodul mit Führungsschienen zur Führung der Abdeckung aus einer die Schließbacken überbrückenden Position in eine die Aufnahme des Schließkeilmoduls zulassenden Position und umgekehrt ausgebildet ist, wobei die Führungsschienen mit den Keilnuten der Haltebacken fluchten.

Zur Realisierung einer einfachen und leichtgängigen Führung der Abdeckung ist gemäß einer Weiterbildung der Erfindung die Abdeckung auf einer Führungsstange verschiebbar angeordnet, die mit einem die Führungsschienen endseitig verbindenden Anschlag verbunden ist. Dabei ist die Abdeckung entgegen der die Haltebacken überbrückenden Position mittels eines Federelements vorgespannt, welches vorzugsweise auf der Führungsstange angeordnet ist.

Desweiteren ist es weiterbildungsgemäß vorgesehen, dass zur Führung der Abdeckung in den Keilnuten und den Führungsschienen dieselbe mit senkrecht zu deren Verschieberichtung wirkenden Führungsfederelementen ausgebildet ist. Damit kann die Abdeckung spielfrei zwischen der die Haltebacken freigebenden und der dieselben verschließenden Position verschoben werden.

Eine besonders vorteilhafte Ausgestaltung der Abdeckung ergibt sich dadurch, dass die Abdeckung als die beiden Haltebacken überbrückendes Rollosystem mit flexibel verbunden Lamellenelementen zum Aufrollen auf eine Rollowelle ausgebildet ist, wobei die Abdeckung aus einer die Schließbacken überbrückenden Position in eine die Aufnahme des Schließkeilmoduls zulassenden Position auf die Rollowelle aufgewickelt ist. Diese Ausgestaltung bietet den Vorteil, dass weniger Bauraum für die Abdeckung in ihrer die Schließbacken freigebenden Position erforderlich ist.

Die Erfindung wird nachfolgend anhand eines Ausführungsbeispiels unter Bezugnahme auf die beigefügten Figuren ausführlich beschrieben. Es zeigen:
- Figur 1: eine schematische und perspektivische Darstellung einer Fahrzeugtüre, welche mittels einer ein Schließkeilmodul und ein Haltebackenmodul umfassende Kupplungsvorrichtung mit einem Seitenwandrahmen verbunden ist,
- Figur 2: eine schematische Darstellung des gemäß Figur 1 an der Fahrzeugtüre angeordneten Schließkeilmoduls der Kupplungsvorrichtung,
- Figur 3: eine schematische Explosionsdarstellung eines Haltebackenmoduls mit einer erfindungsgemäßen Abdeckvorrichtung,
- Figur 4: eine schematische Darstellung des an einem Seitenwandrahmen nach Figur 1 montierten Haltebackenmodul mit einer erfindungsgemäß Abdeckvorrichtung im offenen Zustand,
- Figur 5: eine schematische Darstellung des Haltebackenmodul nach Figur 4 im geschlossenen Zustand,
- Figur 6: eine schematische Schnittdarstellung gemäß Schnitt A-A nach Figur 4,
- Figur 7: eine schematische Schnittdarstellung gemäß Schnitt B-B nach Figur 4,
- Figur 8: ein Halteelement zur Montage des Haltebackenmoduls an einem Seitenwandrahmen,
- Figur 9: eine schematische Darstellung der Abdeckung der erfindungsgemäßen Abdeckvorrichtung,
- Figur 10: eine schematische Darstellung einer alternativen Abdeckung der erfindungsgemäßen Abdeckvorrichtung, und
- Figur 11: eine schematische Darstellung der Abdeckung nach Figur 11 in einer teilweise aufgerollten Stellung.

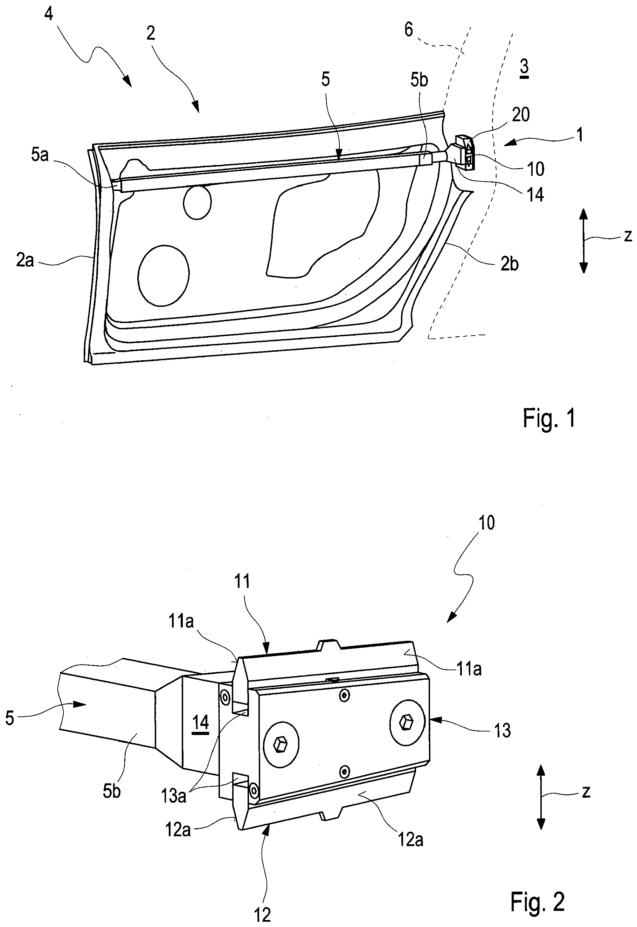

Figur 1 zeigt eine Fahrzeugtüre 2 einer Fahrzeugkarosserie 4, bspw. eines Kraftfahrzeugs, welche über eine Kupplungsvorrichtung 1 mit einem als B-Säule 6 der Fahrzeugkarosserie 4 ausgebildeten Seitenwandrahmen 3 gekoppelt wird.

Diese Kupplungsvorrichtung 1 ist aus der DE 10 2012 011 420 A1 bekannt und umfasst ein mit der Fahrzeugtüre 2 verbundenes Schließkeilmodul 10 und ein an der B-Säule 6 bzw. dem Seitenwandrahmen 3 der Fahrzeugkarosserie 4 montiertes Haltebackenmodul 20, die zur Herstellung einer lösbaren Verbindung miteinander gekoppelt werden. Gemäß Figur 1 ist das Schließkeilmodul 10 mit einem im oberen Bereich der Fahrzeugtüre 2 in Längsrichtung (x-Richtung) verlaufenden Türversteifungselement 5 der Fahrzeugtüre 2 kraftgekoppelt.

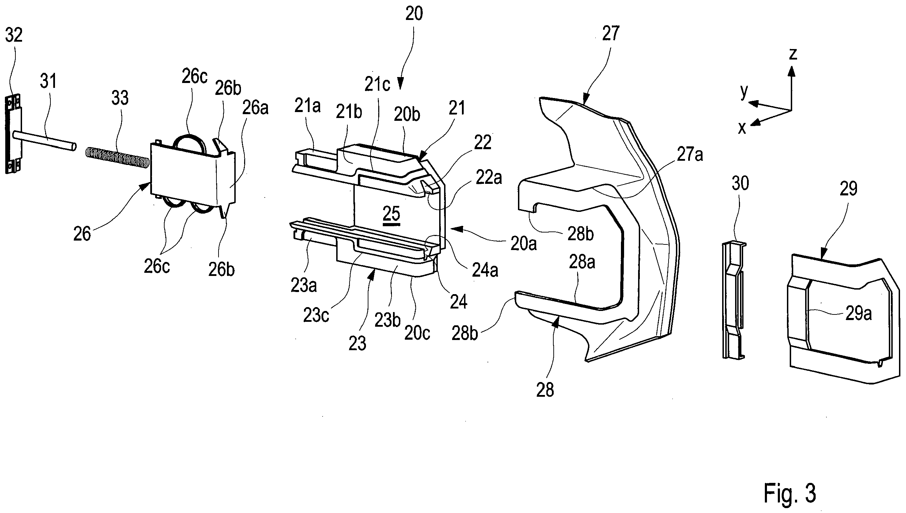

Die Kopplung des Schließkeilmoduls 10 mit dem Haltebackenmodul 20 erfolgt dadurch, dass zunächst das Schließkeilmodul 10 durch Schließen der Fahrzeugtüre 2 zwischen zwei auf einer Grundplatte 25 angeordneten Haltebacken 21 und 23 des in Figur 3 dargestellten Haltebackenmoduls 20 geführt wird und anschließend zwei in einem Schließkeilhalter 13 des Schließkeilmoduls 10 in z-Richtung verschiebbar angeordnete Schließkeile 11 und 12 gemäß Figur 2 mittels einer Antriebsvorrichtung 14 durch Ausfahren aus Nuten 13a des Schließkeilhalters 13a in Keilnuten 22 und 24 der Haltebacken 21 und 23 gedrückt werden, so dass Keilflächen 11a und 12a der Schließkeile 11 und 12 flächenschlüssig an Keilflächen 22a und 22b der Keilnuten 22 und 24 der Haltebacken 21 und 23 anliegen.

Würde das in Figur 3 dargestellte Haltebackenmodul 20 als einzelnes Bauelement an der B-Säule 6 der Fahrzeugkarosserie 4 entsprechend der Darstellung nach Figur 1 montiert, wären zum einen bei geöffneter Fahrzeugtüre 2 die Haltebacken 21 und 23 des Haltebackenmoduls 20 sichtbar und daher nachteilig für das optische Erscheinungsbild und außerdem bestünde aufgrund des offenen Zugangs in den Bereich der Haltebacken 21 und 23 eine erhebliche Verschmutzungsgefahr. Zudem würde aufgrund der offenliegenden Haltebacken 21 und 23 mit Kanten und Ecken für aus- und einsteigende Fahrzeugpassagiere eine erhebliche Verletzungsgefahr bestehen; auch wäre das Verfangen der Kleidung beim Ein- und Aussteigen an diesen Kanten und Ecken nicht auszuschließen.

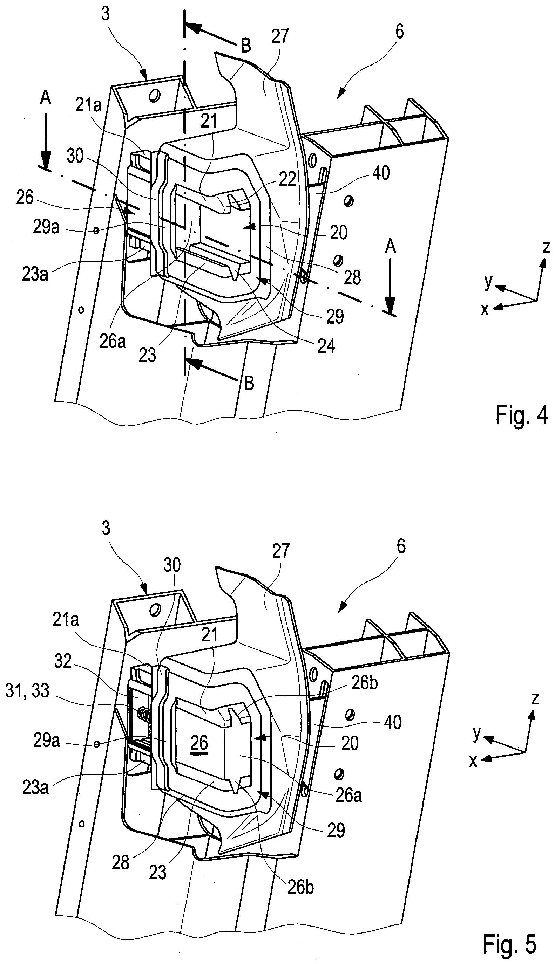

Daher ist zum Verschließen des Bereiches zwischen den Haltebacken 21 und 23 des Haltebackenmoduls 20 eine verschiebbare Abdeckung 26 vorgesehen, welche beim Schließen der Fahrzeugtüre 2 von dem Schließkeilmodul 10 zur Seite geschoben wird, so dass das Schließkeilmodul 10 zwischen die Haltebacken 21 und 23 des Haltebackenmoduls 10 geführt werden kann. Die die Haltebacken 21 und 23 freigebende Position der Abdeckung 26 zeigt Figur 4, während in Figur 5 die Abdeckung in einer den Bereich zwischen den beiden Haltebacken 21 und 23 überdeckenden Position dargestellt ist.

Um auch die zum Einführen des Schließkeilmoduls 10 vorgesehene Einführstirnseite 20a des Haltebackenmoduls 20 abzudecken, weist die flächig ausgebildete Abdeckung 26 einen Flansch 26a mit an die Keilform der Keilnuten 22 und 24 der Haltebacken 21 und 23 angepasste Nasen 26b auf.

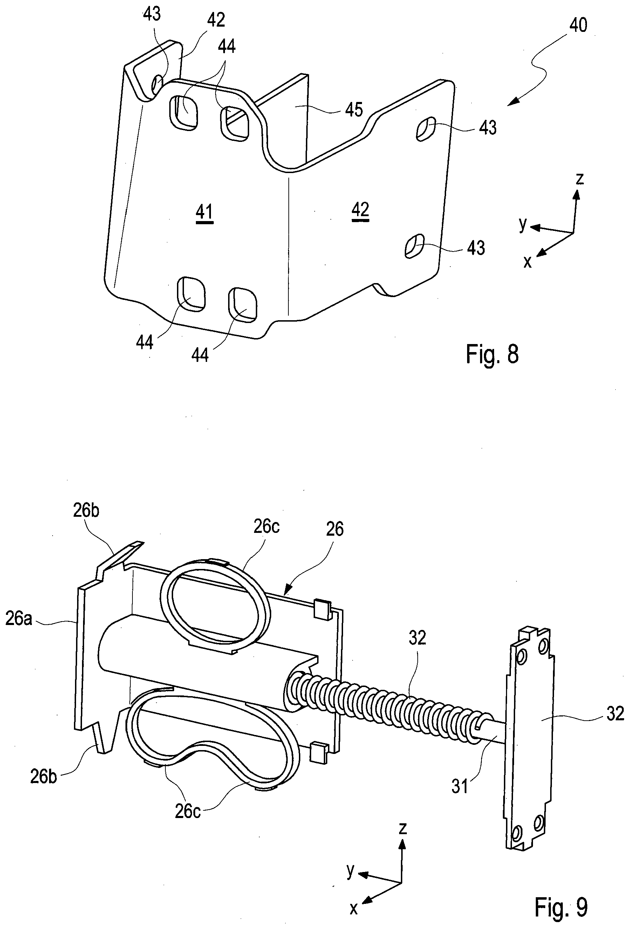

Zum Führen der Abdeckung 26 sind an die beiden Haltebacken 21 und 23 in y-Richtung verlaufende Führungsschienen 21a und 23a angeformt, die mit den Keilnuten 22 und 24 der Haltebacken 21 und 23 fluchten, wobei gemäß Figur 9 auf der Rückseite der Abdeckung 26 angeformte Führungsfederelemente 26c eine Führung der Abdeckung 26 in den Führungsschienen 21a und 23a sowie in den Keilnuten 22 und 23 bewirken.

Im montierten Zustand wird die Abdeckung 26 zusätzlich von einer Führungsstange 31 geführt, die gemäß Figur 9 einenends in einer auf der Rückseite der Abdeckung 26 angeformten Führungsöffnung 26d geführt wird und andernends mit einem Anschlag 32 verbunden ist, der die Enden der beiden Führungsschienen 21a und 23a verbindet, wie dies aus den Figuren 3 bis 5 und 11 ersichtlich ist. Ferner ist auf der Führungsstange 31 ein Federelement 33 angeordnet, durch welche die Abdeckung 26 in Richtung der den Bereich der Haltebacken 21 und 23 überdeckenden Position vorgespannt wird. Dadurch wird bei offener Fahrzeugtüre 2 durch die Federkraft dieses Federelementes 33 die Abdeckung 26 in die die Haltebacken 21 und 23 überdeckenden Position entsprechend der Darstellung nach Figur 5 verschoben.

Das Haltebackenmodul 20 ist gemäß den Figuren 4 und 5 zusammen mit einer Abdeckvorrichtung an dem Seitenwandrahmen 3 montiert, wobei die Abdeckeinrichtung neben der bereits erwähnten Abdeckung 26 mit Führungsstange 31 und Federelement 33 gemäß Figur 3 weitere Komponenten umfasst, nämlich eine Halteblende 27 mit einer Gummilippe 28 und eine Rahmenblende 29 mit einer Stegblende 30.

Diese Abdeckvorrichtung bewirkt zusammen mit der Abdeckung 26 nicht nur das Abdecken der offenen Haltebacken 21 und 23, sondern gleicht zusammen mit der Gummilippe 28 der Halteblende 27 und der Rahmenblende 29 mit der Stegblende 30 die zwischen der Fahrzeugtüre 2 und dem Seitenwandrahmen 3 auftretenden Toleranzen aus.

Die Halteblende 27 ist mit dem Seitenwandrahmen 3 verbunden und weist gemäß Figur 3 eine Aufnahmeöffnung 27a auf, die das Haltebackenmodul 20 gemäß den Figuren 4 und 5 teilweise rahmenartig und zwar U-förmig die Einführstirnseite 20a und die angrenzenden Längsseiten 20b und 20c des Haltebackenmoduls 20 umschließt, wobei die Verbindung zwischen der Halteblende 27 und dem Haltebackenmodul 20 durch die elastische Gummilippe 28 hergestellt wird, die teilweise die Haltebacken 21 und 23 und die im Bereich der Einführstirnseite 20a liegende Kante der Grundplatte 25 anliegend umschließt.

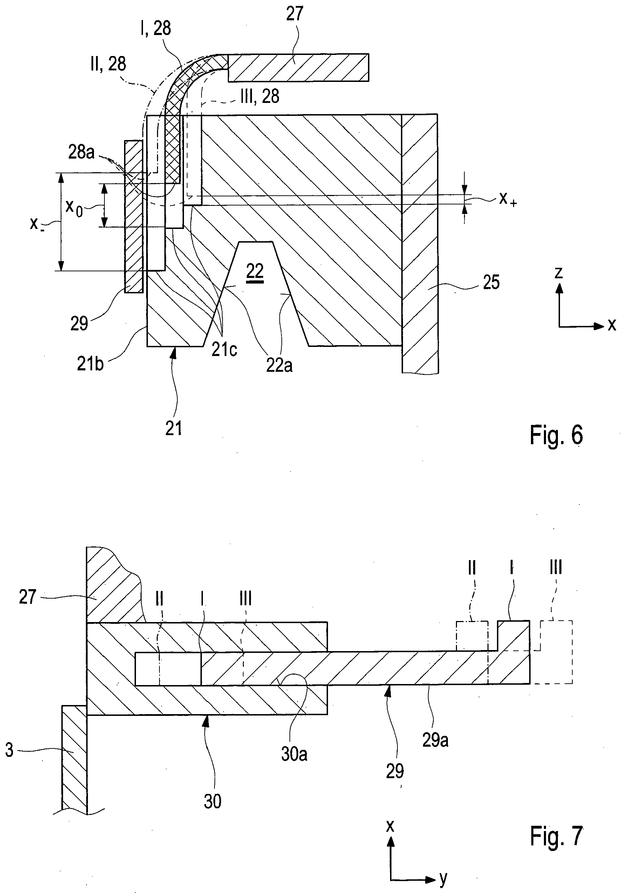

Das Haltebackenmodul 20 wird an die durch die Fahrzeugtüre 2 bestimmte Lage des Schließkeilmoduls 10 angepasst. Da die Halteblende 27 starr mit dem Seitenwandrahmen 3 der Fahrzeugkarosserie 4 verbunden ist, gleicht die Gummilippe 28 die in den x-, y- und z-Richtungen auftretenden Toleranzen elastisch aus. Der Toleranzausgleich in y- und z-Richtung wird anhand der Schnittdarstellung gemäß Figur 6 beschrieben.

In dieser Schnittdarstellung ist die auf der Grundplatte 25 angeordnete Haltebacke 21 mit der die zugehörigen Keilflächen 22a aufweisende Keilnut 22 zu erkennen. Ferner ist die Halteblende 27 angedeutet, welche mit der Gummilippe 28 verbunden ist. Der Verlauf der Gummilippe 28 im Bereich des Haltebacke 21 ist in drei Positionen I, II und III dargestellt, wobei die Position I die Nulllage, die Position II die Lage mit maximaler negativer Toleranz in x- und z-Richtung und die Position III die Lage mit maximaler positiver Toleranz in x- und z-Richtung darstellt. Der Übersichtlichkeit halber ist die Haltebacke 21 zusammen mit der Grundplatte 25 nur in der Position II dargestellt.

In Abhängigkeit der Position I, II oder III überdeckt die Gummilippe 28 mehr oder weniger die Vorderseite 21b der Haltebacke 21, wobei der von der Gummilippe 28 überdeckbare Bereich durch eine in y-Richtung verlaufende Schulter 21c gebildet wird, deren Stufenhöhe der Dicke der Gummilippe 28 entspricht, so dass dieser Bereich der Schulter 21c von der Rahmenblende 29 flächenbündig überdeckt werden kann.

In Figur 6 ist der Abstand der freien Kante 28a der Gummilippe 28 zu dieser Schulter 21c eingetragen. So ist dieser Abstand in der Position I mit x₀, in der Position II mit x₋ und in der Position III mit x₊ bezeichnet, wobei ausgehend von dem Wert x₀ der Wert x₋ größer und der Wert x₊ kleiner ist, da in der Position II die größte negative Toleranz in x- und z-Richtung ausgeglichen werden muss, also der größte Abstand zwischen der Halteblende 27 und der Haltebacke 21 besteht und in der Position III die größte positive Toleranz in x- und y-Richtung ausgeglichen wird und daher der geringste Abstand zwischen der Halteblende 27 und der Haltebacke 21 besteht.

Für die Lage der Kante 28a der Gummilippe 28 an der anderen Haltebacke 23 des Haltebackenmoduls 20 gilt entsprechendes. Auch an dieser Haltebacke 23 befindet sich an der Vorderseite 23b eine in y-Richtung verlaufende Schulter 23c, die eine Begrenzung für die Kante 28a der Gummilippe 28 bildet.

Zur Montage des Haltebackenmoduls 20 wird zunächst die Rahmenblende 29 an dem Haltebackenmodul 20 montiert. Diese Rahmenblende 29 ist rahmenartig ausgebildet und so konzipiert, dass die haltebackenseitige Kante 28a der Gummilippe 28 überdeckt wird, wobei ein Rahmenblendenteil 29a der Rahmenblende 29 die Enden 28b der Gummilippe 28 überbrückt.

Des weiteren wird an der äußeren Kante dieses Rahmenblendenteils 29a der Rahmenblende 29 eine Stegblende 30 mittels eines Schlitzes aufgeschoben, so dass hierdurch ein aufgrund des Toleranzausgleichs in y-Richtung entstehenden Spalt zwischen der Kante der Halteblende 29 und der benachbarten Kante des Rahmenblendenteils 29a überdeckt wird, wie dies aus der Schnittdarstellung gemäß Figur 7 ersichtlich ist.

Auch in dieser Figur 7 sind für die Rahmenblende 29 drei Positionen I, II und III dargestellt. Die Position I stellt die Nulllage der Rahmenblende 29, die Position II die Lage mit maximaler negativer Toleranz in y-Richtung und die Position III die Lage mit maximaler positiver Toleranz in y-Richtung dar. Die Stegblende 30 fluchtet mit der äußeren Kante der Halteblende 27 bzw. liegt an dem Seitenwandrahmen 3 der Fahrzeugkarosserie an. Dadurch dass die Stegblende 30 mittels eines Schlitzes 30a in y-Richtung verschiebbar die äußere Kante des Rahmenblendenteils 29a umschließt, kann in y-Richtung ein Toleranzausgleich erreicht werden.

Das mit der Rahmenblende 29 und der Stegblende 30 montierte Haltebackenmodul 20 zeigt Figur 6, wobei die Rahmenblende 30 an der Schulter 21c und 23c der Haltebacke 21 und der Haltebacke 23 anliegt und aufgrund der von der Schulter 21c und der Schulter 23c gebildeten Absatz ein Zwischenraum zwischen der Rahmenblende und der Haltebacke 21 bzw. 23 zur randseitigen Aufnahme der Gummilippe 28 entsteht.

Dieses Haltebackenmodul 20 wird zusammen mit der Rahmenblende 29 und der Stegblende 30 in die von der Gummilippe 28 gebildeten Öffnung eingeschoben und über ein in Figur 8 dargestelltes Halteelement 40 mit dem Seitenwandteil 3 verbunden.

Dieses Halteelement 40 ist U-förmig mit zwei durch ein Mittelteil 41 verbundenen Schenkeln 42 mit einer dazwischen liegenden Stützwand 45 ausgebildet. Dieses Halteelement 40 wird derart mit dem Seitenwandrahmen 3 verbunden, dass die Schenkel 42 in x-Richtung und das Mittelteil 41 im Wesentlichen in der y-z-Ebene liegt. Das Haltebackenmodul 20 wird an dessen Rückseite über Befestigungsöffnungen 44 mit dem Halteelement 40 verbunden, wobei der Durchmesser dieser Befestigungsöffnungen so groß gewählt ist, dass das Haltebackenmodul 20 in y- und z-Richtung verschiebbar bleibt. Zur Verbindung mit dem Seitenwandrahmen 3 weisen die Schenkel 42 Befestigungsöffnungen 43 auf, die in x-Richtung als Langloch ausgeführt sind, so dass das Haltebackenmodul 20 in x-Richtung verschiebbar ist. Als Befestigungsmittel sind Schraubmittel vorgesehen, wobei das Haltebackenmodul 20 zusammen mit der Rahmenblende 29 und der Stegblende 30 in die Halteblende 27 eingeführt wird und über das Halteelement 40 so mittels den Schraubmitteln mit dem Seitenwandrahmen 3 verbunden wird, dass das Haltebackenmodul 20 in x-, y- und z-Richtung verschiebbar bleibt.

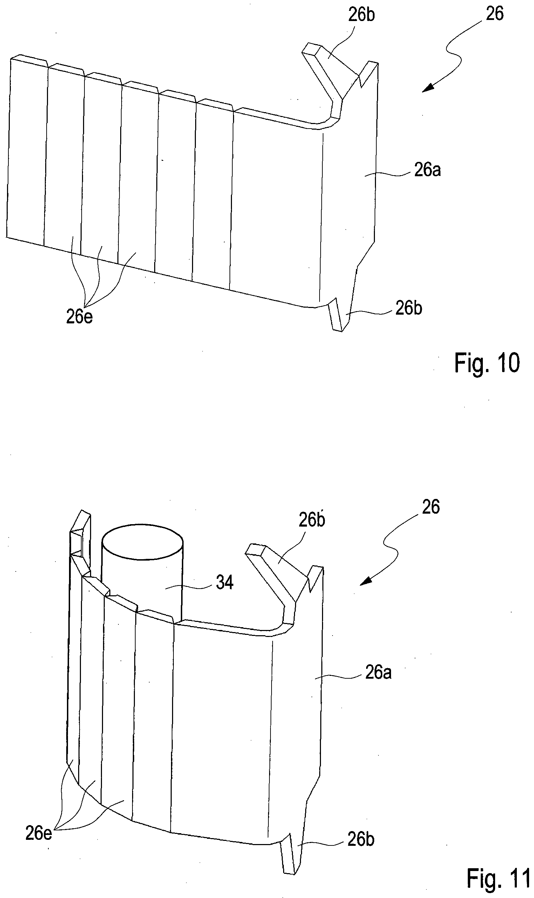

Anschließend wird die Fahrzeugtüre 2 geschlossen, so dass das Schließkeilmodul 10 in das Haltebackenmodul 20 einfahren und mit diesem unter Anpassung der Lage des Haltebackenmoduls 20 in x-, y- und z-Richtung an das Schließkeilmodul 10 gekoppelt werden kann. In dieser Lage wird das Haltebackenmodul 20 mit den Schraubverbindungen fixiert und mit dem Seitenwandrahmen fest verbunden.
Eine als Rollosystem ausgebildete alternative Ausgestaltung der Abdeckung 26 zeigen die Figuren 10 und 11, bei welcher ein Teil der Abdeckung 26 aus Lamellenelementen 26e besteht, die flexibel miteinander verbunden sind, so dass zum Freigeben der Haltebacken 21 und 23 des Haltebackenmoduls 30 die Abdeckung 26 mittels der Lamellenelementen 26e auf eine Rollowelle 34 gewickelt werden kann, wie dies schematisch in Figur 11 angedeutet ist. Ansonsten ist diese alternative Abdeckung 26 ebenso mit einem Flansch 26a mit angeformten Nasen 26b zur Abdeckung der Einführstirnseite 20a des Haltebackenmoduls 20 ausgebildet.

### Bezugszeichen

- 1: Kupplungsvorrichtung
- 2: Fahrzeugtüre
- 3: Seitenwandrahmen
- 4: Fahrzeugkarosserie
- 5: Türversteifungselement der Fahrzeugtüre 2
- 6: B-Säule der Fahrzeugkarosserie 4

- 10: Schließkeilmodul der Kupplungsvorrichtung
- 11: Schließkeil
- 11a: Keilfläche des Schließkeils 11
- 12: Schließkeil
- 12a: Keilfläche des Schließkeils 12
- 13: Schließkeilhalter des Schließkeilmoduls 10
- 13a: Nut des Schließkeilhalters 13
- 14: Antriebsvorrichtung

- 20: Haltebackenmodul der Kupplungsvorrichtung
- 20a: Einführstirnseite des Haltebackenmoduls 20
- 20b: Längsseiten des Haltebackenmoduls 20
- 20c: Längsseiten des Haltebackenmoduls 20
- 21: Haltebacke des Haltebackenmoduls 20
- 21a: Führungsschiene
- 21b: Vorderseite der Haltebacke 21
- 21c: Schulter der Haltebacke 21
- 22: Keilnut der Haltebacke 21
- 22a: Keilflächen der Keilnut 22
- 23: Haltebacke des Haltebackenmoduls 20
- 23a: Führungsschiene
- 23b: Vorderseite der Haltebacke 23
- 23c: Schulter der Haltebacke 23
- 24: Keilnut der Haltebacke 23
- 24a: Keilflächen der Keilnut 24
- 25: Grundplatte des Haltebackenmoduls 20
- 26: Abdeckung
- 26a: Flansch der Abdeckung 26
- 26b: Nase des Flansches 26a
- 26c: Führungsfederelementen der Abdeckung 26
- 26d: Führungsöffnung der Abdeckung 26
- 26e: Lamellenelement der Abdeckung 26
- 27: Halteblende
- 27a: Aufnahmeöffnung der Halteblende 27
- 28: Gummilippe
- 28a: haltebackenseitige Kante der Gummilippe 28
- 28b: freies Ende der Gummilippe 28
- 29: Rahmenblende
- 29a: Rahmenblendenteil der Rahmenblende 29

- 30: Stegblende der Rahmenblende 29
- 30a: Schlitz der Stegblende 30
- 31: Führungsstange
- 32: Anschlag
- 33: Federelement
- 34: Rollowelle

- 40: Halteelement
- 41: Mittelteil des Halteelementes 40
- 42: Schenkel des Halteelementes 40
- 43: Befestigungsöffnungen
- 44: Befestigungsöffnungen
- 45: Stützwand des Halteelementes 40

## Patentansprüche

1. Abdeckvorrichtung für ein mit einem Schließkeilmodul (10) in eine die Verbindung einer Fahrzeugtüre (2) mit einem Seitenwandrahmen (3) einer Fahrzeugkarosserie (4) bewirkende lösbare Kopplung bringbares Haltebackenmodul (20), wobei
- das an der Fahrzeugtüre der Fahrzeugkarosserie schlossseitig angeordnete Schließkeilmodul (10) mit zwei parallel gegeneinander verschiebbar gelagerten Schließkeilen (11, 12) mit Keilflächen (11b, 12b) ausgebildet ist,
- das an dem Seitenwandrahmen angeordnete Haltebackenmodul (20) mit zwei, das Schließkeilmodul (10) zwischen sich aufnehmenden Haltebacken (21, 23) mit Keilflächen (22a, 24a) aufweisenden Keilnuten (22, 24) ausgebildet ist, wobei mittels einer Antriebseinrichtung (30) die Schließkeile (11, 12) durch auseinander verlagern mit ihren Keilflächen (11b, 12b) in die Keilnuten (22, 24) gedrückt werden, und
- die beiden Haltebacken (21, 23) von einer verschiebbaren Abdeckung (26) überbrückbar sind,
**dadurch gekennzeichnet, dass**
- eine mit dem Seitenwandrahmen (3) verbundene Halteblende (27) vorgesehen ist, welche die für das Einführen des Schließkeilmoduls (10) in das Haltebackenmodul (20) vorgesehene Einführstirnseite (20a) sowie die angrenzenden in Fahrzeugquerrichtung (y-Richtung) verlaufenden Längsseiten (20b, 20c) des Haltebackenmoduls (20) U-förmig umschließt, und
- zum Ausgleich von Toleranzen eine Gummilippe (28) vorgesehen ist, welche die Halteblende (27) mit dem Haltebackenmodul (20) elastisch verbindet.

2. Abdeckvorrichtung nach Anspruch 1,
**dadurch gekennzeichnet, dass** auf dem Haltebackenmodul (20) eine Rahmenblende (29) angeordnet ist, welche die haltebackenmodulseitige Kante der Gummilippe (28) überdeckt und die offenen Enden der Gummilippe (28) mittels eines stegartigen Rahmenblendenteils (29a) der Rahmenblende (29) verbindet.

3. Abdeckvorrichtung nach Anspruch 2,
**dadurch gekennzeichnet, dass** auf der Rahmenblende (29) eine Stegblende (30) verschiebbar angeordnet ist, welche die äußere Kante des Rahmenblendenteils (29a) der Rahmenblende (29) überdeckt und mit der benachbarten Kante des Haltebackenmoduls (20) abschließt.

4. Abdeckvorrichtung nach einem der vorhergehenden Ansprüche,
**dadurch gekennzeichnet, dass** ein das Haltebackenmodul (20) mit dem Seitenwandrahmen (3) verbindendes Halteelement (40) vorgesehen ist, welches zur Befestigung an dem Seitenwandrahmen (3) mit in z- und x-Richtung toleranzausgleichenden Befestigungsöffnungen (43) ausgebildet ist und zur Befestigung des Haltebackenmoduls (20) an dem Halterelement (40) an demselben in y-Richtung toleranzausgleichende Befestigungsöffnungen (44) vorgesehen sind.

5. Abdeckvorrichtung nach Anspruch 4,
**dadurch gekennzeichnet, dass** das Halteelement (40) U-förmig ausgebildet ist, wobei die Befestigungsöffnung (43) zur Befestigung an dem Seitenwandrahmen (3) an wenigstens einem Schenkel (42) des Halteelements (40) vorgesehen sind und die Befestigungsöffnungen (44) zur Befestigung des Haltebackenmoduls (20) an dem die beiden Schenkel (42) verbindenden Mittelteil (41) des Halteelements (40) ausgebildet sind.

6. Abdeckvorrichtung nach einem der vorhergehenden Ansprüche,
**dadurch gekennzeichnet, dass** die Abdeckung (26) die beiden Haltebacken (21, 23) formschlüssig verbindend ausgebildet ist und einen die Einführstirnseite (20a) des Haltebackenmoduls (20) formschlüssig abdeckenden Flansch (26a) aufweist.

7. Abdeckvorrichtung nach Anspruch 6,
**dadurch gekennzeichnet, dass** der Flansch (26a) der Abdeckung (26) an die Keilnuten (22, 24) der Haltebacken (21, 23) angepasste Nasen (26b) aufweist.

8. Abdeckvorrichtung nach einem der vorhergehenden Ansprüche,
**dadurch gekennzeichnet, dass** das Haltebackenmodul (20) mit Führungsschienen (21a, 23a) zur Führung der Abdeckung (26) aus einer die Schließbacken (21, 23) überbrückenden Position in eine die Aufnahme des Schließkeilmoduls (10) zulassenden Position und umgekehrt ausgebildet ist, wobei die Führungsschienen (21a, 23a) mit den Keilnuten (22, 24) der Haltebacken (21, 23) fluchten.

9. Abdeckvorrichtung nach Anspruch 8,
**dadurch gekennzeichnet, dass** die Abdeckung (26) auf einer Führungsstange (31) verschiebbar angeordnet ist, die mit einem die Führungsschienen (21a, 23a) endseitig verbindenden Anschlag (32) verbunden ist.

10. Abdeckvorrichtung nach Anspruch 8 oder 9,
**dadurch gekennzeichnet, dass** die Abdeckung (26) entgegen der die Haltebacken (21, 23) überbrückenden Position mittels eines Federelements (33) vorgespannt ist, welches vorzugsweise auf der Führungsstange (31) angeordnet ist.

11. Abdeckvorrichtung nach einem der Ansprüche 8 bis 10,
**dadurch gekennzeichnet, dass** zur Führung der Abdeckung (26) in den Keilnuten (22, 24) und den Führungsschienen (21a, 23a) dieselbe mit senkrecht zu deren Verschieberichtung wirkenden Führungsfederelementen (26c) ausgebildet ist.

12. Abdeckvorrichtung nach einem der Ansprüche 1 bis 7,
**dadurch gekennzeichnet, dass** die Abdeckung (26) als die beiden Haltebacken (21, 23) überbrückendes Rollosystem mit flexibel verbunden Lamellenelementen (26e) zum Aufrollen auf eine Rollowelle (34) ausgebildet ist, wobei die Abdeckung (26) aus einer die Schließbacken (21, 23) überbrückenden Position in eine die Aufnahme des Schließkeilmoduls (10) zulassenden Position auf die Rollowelle (34) aufgewickelt ist.

## Claims

1. Covering device for a retaining jaw module (20) that can be detachably coupled with a lock striker module (10) to bring about the connection of a vehicle door (2) with a side panel frame (3) of a vehicle body (4), wherein
- the lock striker module (10) arranged on the lock side on the vehicle door of the vehicle body is designed with two wedge-shaped lock strikers (11, 12) with wedge-shaped surfaces (11b, 12b), which are mounted so as to move parallel to each other,
- the retaining jaw module (20) arranged on the side panel frame is designed having two retaining jaws (21, 23) which accommodate the lock striker module (10) between therebetween, having wedge-shaped grooves (22, 24) comprising wedge-shaped surfaces (22a, 24a), wherein the wedge-shaped lock strikers (11, 12) are moved apart from each other by means of a drive unit (30), wherein the wedge-shaped surfaces (11b, 12b) of same are pressed into the wedge-shaped grooves (22, 24), and
- both of the retaining jaws (21, 23) can be bridged by a displaceable cover (26), **characterised in that**
- a retaining cover (27) connected with the side panel frame (3) is provided, which encloses the insertion end side (20a) in a U-shaped manner, said insertion end side being provided to insert the lock striker module (10) into the retaining jaw module (20), and also encloses the longitudinal sides (20b, 20c) of the retaining jaw module (20) in a U-shaped manner, said longitudinal sides extending in the transverse direction (y-direction) of the vehicle, and
- a rubber lip (28) is provided to compensate for tolerances and elastically connects the retaining cover (27) with the retaining jaw module (20).

2. Covering device according to Claim 1,
**characterised in that**
a frame cover (29) is arranged on the retaining jaw module (20), which covers the edge of the rubber lip (28) on the retaining jaw module side and connects the open end of the rubber lip (28) by means of a strip-shaped frame cover portion (29a) of the frame cover (29).

3. Covering device according to Claim 2,
**characterised in that**
a strip cover (30) is arranged moveably on the frame cover (29), which covers the outer edge of the frame cover portion (29a) of the frame cover (29) and locks with the adjacent edge of the retaining jaw module (20).

4. Covering device according to any one of the previous claims,
**characterised in that**
a retaining element (40) is provided that connects the retaining jaw module (20) to the side panel frame, which is designed to attach on the side panel frame (3) by means of tolerance-compensating attachment holes (43) in the z- and x-direction, and the same type of attachment holes (44) providing tolerance compensation in the y-direction are provided for attaching the retaining jaw module (20) on the retaining element (40).

5. Covering device according to Claim4,
**characterised in that**
the retaining element (40) has a U-shaped design, wherein the attachment hole (43) is provided for attaching at least one side portion (42) of the retaining element (40) to the side panel frame (3) and the attachment holes (44) are designed for attaching the retaining jaw module (20) to the middle portion (41) of the retaining element (40) connected to both side portions (42).

6. Covering device according to any one of the previous claims,
**characterised in that**
the cover (26) is designed to connect with both retaining jaws (21, 23) in an interlocking manner and has a flange (26a) which covers the insertion end side (20a) of the retaining jaw module (20) in an interlocking manner.

7. Covering device according to Claim 6,
**characterised in that**
the flange (26a) of the cover (26) has lugs (26b) which fit into the wedge-shaped grooves (22, 24) of the retaining jaws (21, 23).

8. Covering device according to any one of the previous claims,
**characterised in that**
the retaining jaw module (20) is designed with guide rails (21a, 23a) to guide the cover (26) out of a position bridging the locking jaws (21, 23) and into an admitting position to receive the lock striker module (10) and vice versa, whereby the guide rails (21a, 23a) align with the wedge-shaped grooves (22, 24) of the retaining jaws (21, 23).

9. Covering device according to Claim 8,
**characterised in that**
the cover (26) is arranged in a moveable way on a guide bar (31) which is connected with a stop (32) the ends of which are joined with the guides (21a, 23a).

10. Covering device according to Claim 8 or 9,
**characterised in that**
the cover (26) is prestressed toward the position bridging the closing jaws (21, 23) by means of a spring element (33) which is preferably arranged on the guide bar (31).

11. Covering device according to any one of Claims 8 to 10,
**characterised in that**
in order to guide the cover (26) into the wedge-shaped grooves (22, 24) and into the guide rails (21a, 23a), said covering device is designed having guiding spring elements (26c) acting perpendicular to the sliding direction of same.

12. Covering device according to any one of Claims 1 to 7,
**characterised in that**
the cover (26) is designed as a roller system bridging both retaining jaws (21, 23), comprising flexibly connected lamellar elements (26e) for rolling up on a roller shaft (34), wherein the cover (26) is wound up from a position bridging the locking jaws (21, 23) into a position admitting the receiving of the lock striker module (10) on the roller shaft (34)

## Revendications

1. Dispositif de recouvrement pour un module à joues de retenue (20) pouvant être amené, avec un module à clavettes de fermeture (10), en accouplement amovible entraînant la liaison d'une portière de véhicule (2) à un cadre de paroi latérale (3) d'une carrosserie de véhicule (4),
- le module à clavettes de fermeture (10) disposé côté serrure au niveau de la portière de véhicule de la carrosserie de véhicule étant réalisé avec deux clavettes de fermeture (11, 12) montées de manière à pouvoir être déplacées par coulissement parallèlement l'une par rapport à l'autre et munies de surfaces cunéiformes (11b, 12b),
- le module à joues de retenue (20) disposé au niveau du cadre de paroi latérale étant réalisé avec deux joues de retenue (21, 23) logeant entre elles le module à clavettes de fermeture (10) et munies de rainures de clavette (22, 24) présentant des surfaces cunéiformes (22a, 24a), les clavettes de fermeture (11, 12) étant poussées, au moyen d'un dispositif d'entraînement (30), en s'écartant l'une de l'autre, par leurs surfaces cunéiformes (11b, 12b) dans les rainures de clavette (22, 24), et
- les deux joues de retenue (21, 23) pouvant être surmontées par une partie couvrante (26) pouvant être déplacée par coulissement,
**caractérisé en ce**
- **qu'**est prévu un cache de retenue (27) relié au cadre de paroi latérale (3), lequel entoure en forme de U le côté frontal d'introduction (20a) prévu pour l'introduction du module à clavettes de fermeture (10) dans le module à joues de retenue (20) ainsi que les côtés longitudinaux (20b, 20c) adjacents, s'étendant dans la direction transversale du véhicule (direction y), du module à joues de retenue (20), et
- **qu'**est prévue, pour compenser des tolérances, une lèvre en caoutchouc (28), qui relie élastiquement le cache de retenue (27) au module à joues de retenue (20).

2. Dispositif de recouvrement selon la revendication 1,
**caractérisé en ce qu'**un cache de cadre (29) est disposé au niveau du module à joues de retenue (20), lequel cache de cadre recouvre le bord, côté module à joues de retenue, de la lèvre en caoutchouc (28) et relie les extrémités ouvertes de la lèvre en caoutchouc (28) au moyen d'une partie de cache de cadre (29a), du type traverse, du cache de cadre (29).

3. Dispositif de recouvrement selon la revendication 2,
**caractérisé en ce qu'**un cache de traverse (30) est disposé de manière à pouvoir être déplacé par coulissement au niveau du cache de cadre (29), lequel cache de traverse recouvre le bord extérieur de la partie de cache de cadre (29a) du cache de cadre (29) et se termine avec le bord voisin du module à joues de retenue (20).

4. Dispositif de recouvrement selon l'une quelconque des revendications précédentes,
**caractérisé en ce qu'**est prévu un élément de retenue (40) reliant le module à joues de retenue (20) au cadre de paroi latérale (3), lequel est réalisé aux fins de la fixation au niveau du cadre de paroi latérale (3) avec des ouvertures de fixation (43) compensant les tolérances dans les directions z et x, et des ouvertures de fixation (44) compensant les tolérances dans la direction y sont prévues au niveau de l'élément de retenue (40) aux fins de la fixation du module à joues de retenue (20) au niveau dudit élément de retenue.

5. Dispositif de recouvrement selon la revendication 4,
**caractérisé en ce que** l'élément de retenue (40) est réalisé en forme de U, l'ouverture de fixation (43) servant à la fixation au niveau du cadre de paroi latérale (3) étant prévue au niveau au moins d'une branche (42) de l'élément de retenue (40) et les ouvertures de fixation (44) servant à la fixation du module à joues de retenue (20) étant réalisées au niveau de la partie médiane (41), reliant les deux branches (42), de l'élément de retenue (40).

6. Dispositif de recouvrement selon l'une quelconque des revendications précédentes,
**caractérisé en ce que** la partie couvrante (26) est réalisée de manière à relier par complémentarité de forme les deux joues de retenue (21, 23) et présente un flasque (26a) recouvrant par complémentarité de forme le côté frontal d'introduction (20a) du module à joues de retenue (20).

7. Dispositif de recouvrement selon la revendication 6,
**caractérisé en ce que** le flasque (26a) de la partie couvrante (26) présente des ergots (26b) adaptés aux rainures de clavette (22, 24) des joues de retenue (21, 23).

8. Dispositif de recouvrement selon l'une quelconque des revendications précédentes,
**caractérisé en ce que** le module à joues de retenue (20) est réalisé avec des rails de guidage (21a, 23a) servant à guider la partie couvrante (26) hors d'une position surmontant les joues de fermeture (21, 23) jusque dans une position autorisant le logement du module à clavettes de fermeture (10) et inversement, les rails de guidage (21a, 23a) étant alignés avec les rainures de clavette (22, 24) des joues de retenue (21, 23).

9. Dispositif de recouvrement selon la revendication 8,
**caractérisé en ce que** la partie couvrante (26) est disposée de manière à pouvoir être déplacée par coulissement sur une barre de guidage (31) qui est reliée à une butée (32) reliant côté extrémité les rails de guidage (21a, 23a).

10. Dispositif de recouvrement selon la revendication 8 ou 9,
**caractérisé en ce que** la partie couvrante (26) est précontrainte au moyen d'un élément formant ressort (33) à l'encontre de la position surmontant les joues de retenue (21, 23), lequel élément formant ressort est disposé de préférence sur la barre de guidage (31).

11. Dispositif de recouvrement selon l'une quelconque des revendications 8 à 10,
**caractérisé en ce qu'**aux fins du guidage de la partie couvrante (26) dans les rainures de clavette (22, 24) et dans les rails de guidage (21a, 23a), ladite partie couvrante est réalisée avec des éléments formant ressort de guidage (26c) agissant de manière perpendiculaire par rapport à leur direction de déplacement par coulissement.

12. Dispositif de recouvrement selon l'une quelconque des revendications 1 à 7,
**caractérisé en ce que** la partie couvrante (26) est réalisée sous la forme d'un système de store surmontant les deux joues de retenue (21, 23), muni d'éléments formant lamelles (26e) reliés de manière flexible aux fins de l'enroulement sur un arbre de store (34), la partie couvrante (26) étant enroulée sur l'arbre de store (34) à partir d'une position surmontant les joues de fermeture (21, 23) jusque dans une position permettant le logement du module à clavettes de fermeture (10).
